# EUROPÄISCHE PATENTSCHRIFT

(11) **EP 0 592 970 B1**
(45) Veröffentlichungstag und Bekanntmachung des Hinweises auf die Patenterteilung: **07.02.1996**
(21) Anmeldenummer: 93116385.1
(22) Anmeldetag: 09.10.1993
(51) Int. Cl.: B27B 5/14, B23D 47/12

(54) **Antriebssystem für den Sägering einer Ringkreissäge**
Drive system for the blade of an annular saw
Système d'entraînement de la lame d'une scie annulaire

(30) Priorität: 15.10.1992 DE 4234762
(43) Veröffentlichungstag der Anmeldung: 20.04.1994
(73) Patentinhaber: KARL M. REICH MASCHINENFABRIK GmbH, D-72622 Nürtingen (DE)
(72) Erfinder: Raichle, Dieter, D-72622 Nürtingen (DE); Kuhn, Reiner, D-72622 Nürtingen (DE)

(56) Entgegenhaltungen:
- DE-A- 1 403 691
- DE-A- 3 807 094
- DE-U- 9 200 790
- FR-A- 491 833

## Beschreibung

Die Erfindung bezieht sich auf ein Antriebssystem für den Sägering einer Ringkreissäge gemäß Oberbegriff von Anspruch 1.

Ans der DE-OS 1 403 691 ist ein solches Antriebssystem bekannt, wobei jedoch der Antriebsrolle direkt eine einzige Gegundruckrolle genüberliegt.

Bei der Anordnung ergibt sich eine statisch instabile Einspannung des Sägeringes, was zur Folge hat, daß der Sägering ausweicht, wenn Holzspäne zwischen Antriebs- und Gegendruckrolle geraten, so daß er in Schwingungen versetzt wird und von den Führungsrollen wieder stabilisiert werden muß.

Anfgabe der vorliegenden Erfindung ist daher die Schaffung eines Antriebssystems der eingangs genannten Art, das eine sichere Führung des Sägerings gewährleistet.

Diese Anfgabe wird erfindungsgemäß durch das im kennzeichnenden Teil des Anspruchs 1 angegebene Merkmal gelöst.

Durch die Anordnung von zwei Gegendruckrollen gegenüber der Antriebsrolle ergibt sich ein statisch im Gleichgewicht stehendes Kräftedreieck, wobei die Anpresskraft der Antriebsrolle von zwei Gegendruckrollen aufgenommen wird, so daß diese Anpresskraft wesentlich gesteigert werden kann. Dadurch ergibt sich eine Reduzierung des Schlupfverhaltens an der Antriebsrolle, die übertragbare Leistung am Reibungsgetriebe wird erheblich gesteigert, wobei die erforderliche Antriebsleistung durch den erzielbaren besseren Wirkungsgrad reduziert werden kann.

Die Standzeit der beiden Gegendruckrollen wird erheblich gesteigert, es ergibt sich eine Verminderung der Geräusche und durch einfaches Anstauschen der Gegendruckrollen und geringeren Ersatz bietet das erfindungsgemäße Antriebssystem auch bei Einsatz in der Praxis beachtliche Vorteile.

Im folgenden sind Ausführungsbeispiele der Erfindung unter Bezugnahme auf die Zeichnungen näher beschrieben.

Es zeigen:
- Fig. 1: Antriebssystem schematisch, in der Draufsicht
- Fig. 2: Schnitt nach Linie II-II in Fig. 1
- Fig. 3: Schnitt nach die III-III einer zweiten Ausführungsform in Fig. 1

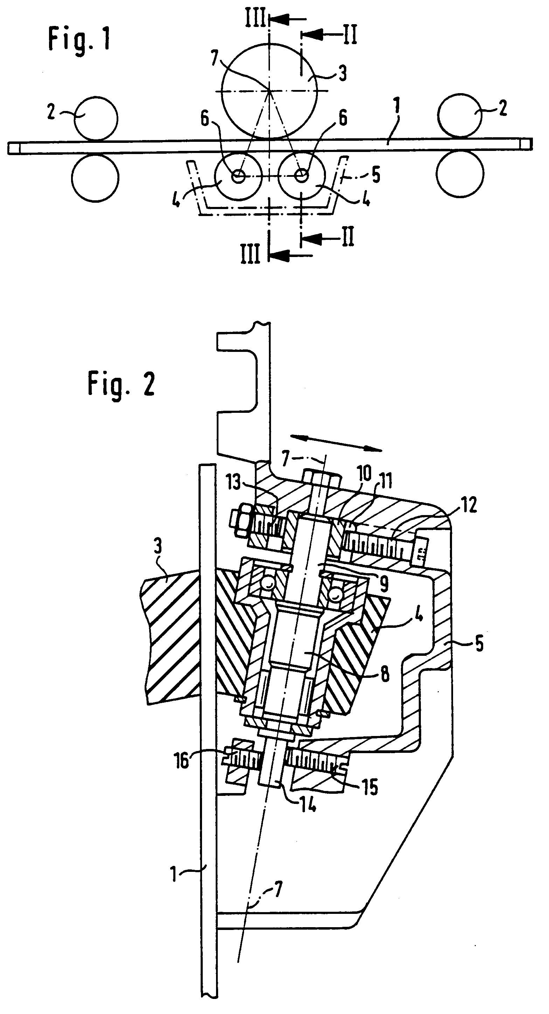

Die schematische Darstellung gemäß Fig. 1 zeigt einen Sägering 1, der von paarweise angeordneten Fühungsrollen 2 geführt wird, zwischen denen eine von einem nicht dargestellten Elektromotor antreibbare Antriebsrolle 3 in Form eines Reibrads den Sägering 1 antreibt.

Der Antriebsrolle 3 liegen zwei Gegendruckrollen 4 gegenüber, die frei drehbar im Lagergehäuse 5 gelagert sind und deren Achsen 6 symmetrisch zu einer durch die Achse 7 der Antriebsrolle 3 verlaufende, zum Sägering 1 senkrechte Ebene angeordnet sind.

Fig. 2 zeigt Einzelheiten der radialen Einstellung der Gegendruckrollen 4, die dabei einzeln einstellbar sind.

Die Gegendruckrolle 4 wird dabei auf einer Welle 8 frei drehbar gelagert, deren oberer Endzapfen 9 in einen Lagerklotz 10 eingreift. Dieser ist in einer Tasche 11 von Lagergehäuse 5 verschiebbar gelagert und läßt sich durch die beiden Einstellschrauben 12 und 13 in die gewünschte Lage verschieben und feststellen.

Der untere Endzapfen 14 wird durch zwei weitere Einstellschrauben 15 und 16 in der gewünschten Winkelstellung festgehalten.

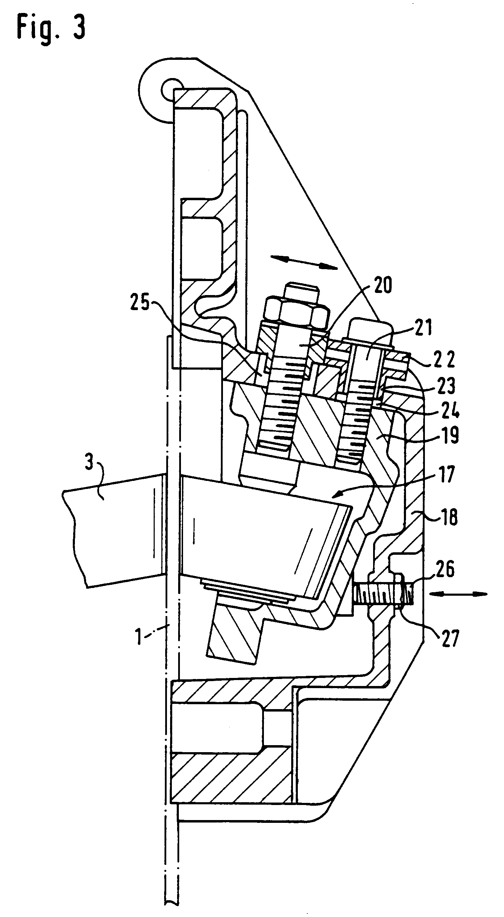

In einer weiteren Ausführungsform gemäß Fig. 3 sind die beiden Gegendzuckrollen 17 in einem vom Lagergehäuse 18 getrennten Rollengehäuse 19 frei drehbar gelagert. Dieses wird durch eine Spannschraube 20 und eine Einstellschraube 21 am Lagergehäuse 18 festgehalten.

Die Einstellschraube 21 ist mit einer Einstellhülse 22 mit exzentrischem Ansatz 23 versehen, der in eine Bohrung 24 von Lagergehäuse 18 eingreift, so daß durch Verdrehen von Einstellhülse 22 eine Radialverschiebung von Rollengehäuse 19 gegenüber dem Lagergehäuse 18 erfolgt.

Die Spannschraube 20 ist dazu in einem Langloch 25 von Lagergehäuse 18 angeordnet.

Als Anschlag für das untere Ende von Rollengehäuse 19 dient eine im Lagergehäuse 18 einschraubbare Madenschraube 26 mit Gegenmutter 27.

Bei dieser Anordnung wird das komplette Rollengehäuse 19 und damit die beiden Gegendruckrollen 17 gemeinsam verstellt.

## Patentansprüche

1. Antriebssystem für den Sägering einer Ringkreissäge mit einer in einem Lagergehäuse angeordneten, kraftbetriebenen, seitlich am Sägering anliegenden Antriebsrolle und einer dieser gegenüberliegenden, frei drehbaren Gegendruckrolle **dadurch gekennzeichnet,** daß mindestens zwei Gegendruckrollen (4, 17) vorgesehen sind.

2. Antriebssystem nach Anspruch 1, **dadurch gekennzeichnet,** daß die Achsen (6) der beiden Gegendruckrollen (4) symmetrisch zu einer durch die Achse (7) der Antriebsrolle (3) verlaufenden, zum Sägering (1) senkrechten Ebene angeordnet sind.

3. Antriebssystem nach Anspruch 1 oder 2, **dadurch gekennzeichnet,** daß die Gegendruckrollen (4, 17) radial einstellbar am Lagergehäuse (5, 18) angeordnet sind.

4. Antriebssystem nach Anspruch 3, **dadurch gekennzeichnet,** daß die Gegendruckrollen (4) auf einer Welle (8) frei drehbar und mit ihren beiden Endzapfen (9 und 14) zwischen Einstellschrauben (12, 13 und 15, 16) einstellbar am Lagergehäuse (5) angeordnet sind.

5. Antriebssystem nach Anspruch 3, **dadurch gekennzeichnet,** daß die Gegendruckrollen (17) in eine Rollengehäuse (19) gelagert sind, das radial einstellbar am Lagergehäuse (18) angeordnet ist.

## Claims

1. A drive system for the sawing ring of a ring circular saw having a drive roller disposed in a bearing casing, power-driven and in lateral contact with said sawing ring and also having a freely rotatable counter-pressure roller opposite said drive roller, **characterized in that** at least two counter-pressure rollers (4, 17) are provided.

2. A drive system according to Claim 1, **characterized in that** the axes (6) of the two counter-pressure rollers (4) are disposed symmetrically to a plane passing through the axis (7) of said drive roller (3) and vertical to said sawing ring (1).

3. A drive system according to Claim 1 or Claim 2, **characterized in that** said counter-pressure rollers (4, 17) are disposed in radially adjustable fashion on said bearing casing (5, 18).

4. A drive system according to Claim 3, **characterized in that** said counter-pressure rollers (4) are disposed freely rotatable on a shaft (8) and adjustable at said bearing casing (5) with their two end journals (9 and 14) between adjusting screws (12, 13 and 15, 16).

5. A drive system according to Claim 3, **characterized in that** said counter-pressure rollers (17) are mounted in a roller casing (19) that is disposed in radially adjustable fashion on said bearing casing (18).

## Revendications

1. Système d'entraînement de la lame d'une scie circulaire annulaire, pourvu d'un galet d'entraînement reposant latéralement sur la lame et disposé dans un logement de palier, et d'un contre-galet libre placé en opposition au galet d'entraînement,
caractérisé par le fait
qu'il est prévu au moins deux contre-galets (4,17).

2. Système d'entraînement selon la revendication 1)
caractérisé par le fait
que les axes (6) des deux contre-galets (4) sont symétriquement disposés par rapport au plan perpendiculaire à la lame (1) formé par l'axe (7) du galet d'entraînement (3).

3. Système d'entraînement selon l'une des revendications 1) ou 2)
caractérisé par le fait
que les contre-galets (4,17) sont disposés de manière réglable radialement sur le logement de palier (5,18).

4. Système d'entraînement selon la revendication 3)
caractérisé par le fait
que les contre-galets (4) tournent librement sur un arbre (8) duquel la position des deux fusées (9 et 14) par rapport au logement de palier (5) peut être réglée au moyen des vis de réglage (12, 13 et 15, 16).

5. Système d'entraînement selon la revendication 3)
caractérisé par le fait
que les contre-galets (17) sont disposés dans une cage (19) disposée de manière réglable radialement sur le logement de palier (18).
